# EUROPEAN PATENT APPLICATION

(11) **EP 2 503 294 A2**
(43) Date of publication of application: **26.09.2012**
(21) Application number: 12169485.5
(22) Date of filing: 14.12.2010
(51) Int. Cl.: G01C 21/36

(54) **Personalized and context-sensitive 3D route guidance**

(30) Priority: 14.12.2009 US 637110
(62) Divisional of application: 10194862.8
(71) Applicant: ROBERT BOSCH GMBH, 70442 Stuttgart (DE)
(72) Inventor: Ren, Liu, Cupertino, CA 95014 (US); Weng, Fuliang, Mountain View, CA 94040 (US)
(74) Representative: Isarpatent

(57) **Abstract**

A method of displaying a navigation map includes determining a route of a vehicle. Three-dimensional data is received. The data is associated with buildings that are disposed within a geographic area. The geographic area includes the route of the vehicle. At least one of the buildings in the data that is adjacent to at least one street of the route is rendered in a first opaque visual style. All of the buildings in the data that are nonadjacent to at least one street of the route are rendered in at least one second visual style different from the first opaque visual style; wherein the three-dimensional data is received from a data provider in a format suitable for photorealistic rendering.

## Description

### BACKGROUND OF THE INVENTION

### 1. Field of the Invention.

The present invention relates to electronic navigation maps, and, more particularly, to rendering images for electronic navigation maps.

### 2. Description of the Related Art.

Navigation maps are essential resources for visitors to an unfamiliar city because these maps visually highlight landmarks including buildings, natural features, and points of interest such as museums, restaurants, parks and shopping districts. While most in-car and portable navigation devices (PNDs) rely on two-dimensional (2D) navigation maps to visualize these landmarks in 2D, three-dimensional (3D) in-car navigation systems are emerging.

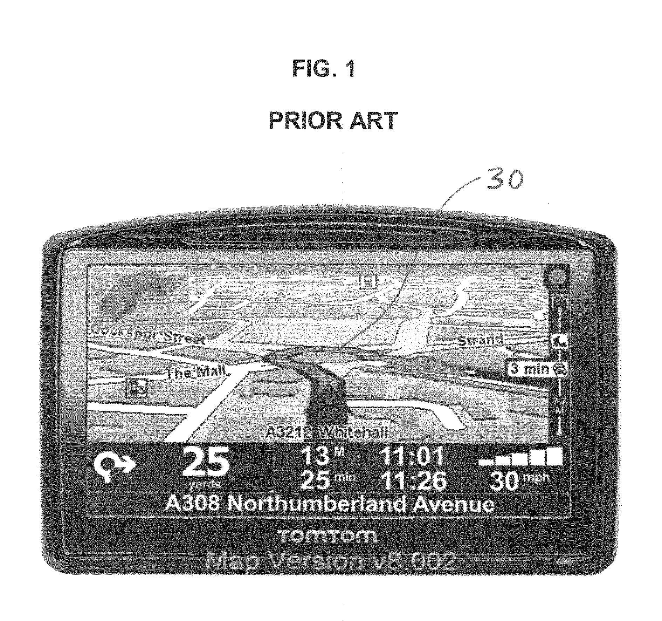

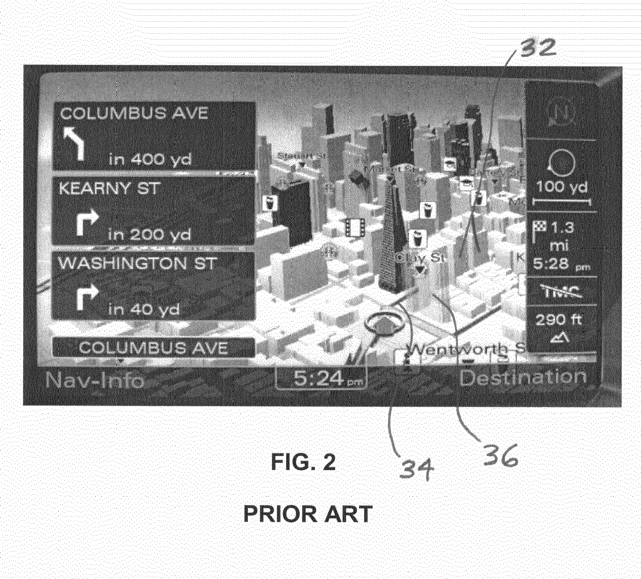

Using a-3D map for navigation can provide a lot of benefits. For example, a 3D map can provide better driver orientation than a 2D map because people live in a 3D world. A 3D map can also improve landmark recognition as the important features (e.g., geometry, structures, textures) of 3D buildings / landmarks can be fully exposed so that it will be a lot easier for a user to match these features with what he could see through the windshield. However, introducing 3D in a navigation map also brings in typical 3D occlusion problems, which could negatively impact the visibility of route guidance for navigation. FIG. 1 shows a typical 2D navigation map where the route 30 can be clearly displayed, such as in colored lines. However, in the example 3D navigation map of FIG. 2, route guidance is significantly occluded in the 3D navigation map because of the high density of 3D buildings rendered in this city scene. For example, buildings 32 may occlude, or block the user's view of, a route 34 that is indicated in FIG. 2 by a dark line.

Some methods have been adopted to reduce the occlusion effects in a 3D map. For example, one typical solution is to visualize the route guidance from a bird's-eye view, or a view point far away from the land. But such a viewpoint is not the one most drivers are comfortable with and the details of 3D buildings cannot be seen clearly for recognition - which essentially reduces the 3D into 2D and largely loses the advantage of 3D navigation over 2D navigation. The other approach is that a few buildings (especially those closest to the viewer) are rendered with transparency. For example, building 36 in FIG. 2 is rendered with transparency such that route 34 is visible behind building 36. However, as evident in FIG. 2, this approach leads to a visual confusion in the viewer's perception of what is the route and what is the building and where the route and the building are in relation to each other. In addition, this building transparency approach may not provide a clear route guidance for the driver.

What is neither disclosed nor suggested by the prior art is a method for presenting 3D landmarks and other 3D objects on a navigation map that overcomes the problems and disadvantages described above.

### SUMMARY OF THE INVENTION

The present invention may provide a method of personalized and context-sensitive 3D route guidance that overcomes the problems in the existing 3D route guidance methods.

The invention comprises, in one form thereof, a method of displaying a navigation map including determining a route of a vehicle. The route includes at least one street segment on which the vehicle travels. Three-dimensional data is received. The data is associated with objects that are disposed within a geographic area. The geographic area includes the route of the vehicle. At least one of the objects in the data that is adjacent to at least one street segment of the route is rendered in a first opaque visual style. All of the objects in the data that are nonadjacent to each street segment of the route are rendered in at least one second visual style different from the first opaque visual style.

The invention comprises, in another form thereof, a method of displaying a navigation map including determining a route of a vehicle. Three-dimensional data associated with objects that are disposed within a geographic area is received. The geographic area includes the route of the vehicle. A selection from a user of a category of the objects is received. At least one of the objects that is within a threshold distance of the route and that is in the selected category is rendered in a first opaque visual style. All of the objects that are beyond the threshold distance from the route or that are out of the selected category are rendered in at least one second visual style. The at least one second visual style is different from the first opaque visual style.

The invention comprises, in yet another form thereof, a method of displaying a navigation map including determining a route of a vehicle. Three-dimensional data associated with objects that are disposed within a geographic area is received. The geographic area includes the route of the vehicle. A selection from a user of a category of the objects is received. A subset of a group of the objects is rendered in a first opaque visual style. Each of the objects in the group is within a threshold distance of the route and is in the selected category. The objects in the subset are automatically chosen based upon a quantitative parameter provided by the user. The objects that are out of the subset of the group are rendered in at least one second visual style, the at least one second visual style being different from the first opaque visual style.

An advantage of the present invention is that it significantly improves the visual clarity of the routes in the 3D navigation display, and thus improves the user experience.

Another advantage of the present invention is that, in embodiments in which 3D landmarks and buildings along the route are depicted in a nonphotorealistic style, cognitive load on the user may be reduced by virtue of avoiding "photorealistic match". That is, when using a photorealistic 3D map, the user could tend to match all the details of rendered 3D objects with those in the real world as photorealistic 3D maps raise the user's expectation of photorealism. Depending on the degree of photorealism, it may take the user a longer time to match all the details (photorealistic match). On the contrary, the user can avoid "photorealistic match" when at least some of the landmarks and buildings are depicted in nonphotorealistic style.

### BRIEF DESCRIPTION OF THE DRAWINGS

The above mentioned and other features and objects of this invention, and the manner of attaining them, will become more apparent and the invention itself will be better understood by reference to the following description of embodiments of the invention taken in conjunction with the accompanying drawings, wherein:
FIG. 1 is an illustration of route guidance displayed on a 2D navigation map according to the prior art.
FIG. 2 is an illustration of route guidance that is partially occluded on a 3D navigation map according to the prior art.
FIG. 3a is one example of an NPR 3D map rendering that may be produced by a method of the present invention.
FIG. 3b is another example of an NPR 3D map rendering that may be produced by a method of the present invention.
FIG. 4 is an illustration of various NPR styles that may be enhanced from the original two-dimensional texture.
FIG. 5 is a block diagram of one embodiment of a 3D map rendering arrangement of the present invention.
FIG. 6 is an example cartoon style rendering technique for scalable real-time 3D animation that may be suitable for use in at least some embodiments of a 3D map rendering method of the present invention.
FIG. 7 is an example pen-and-ink style rendering that may be suitable for use in at least some embodiments of a 3D map rendering method of the present invention.
FIG. 8 is an example pencil rendering that may be suitable for use in at least some embodiments of a 3D map rendering method of the present invention.
FIG. 9 is an example cartoon style rendering that may be suitable for use in at least some embodiments of a 3D map rendering method of the present invention.
FIG. 10 is a flow chart of one embodiment of a method of the present invention for displaying a navigation map.
FIG. 11 is a flow chart of another embodiment of a method of the present invention for displaying a navigation map.
FIG. 12 is a flow chart of yet another embodiment of a method of the present invention for displaying a navigation map.

Corresponding reference characters indicate corresponding parts throughout the several views. Although the exemplification set out herein illustrates embodiments of the invention, in several forms, the embodiments disclosed below are not intended to be exhaustive or to be construed as limiting the scope of the invention to the precise forms disclosed.

### DESCRIPTION OF THE PRESENT INVENTION

The invention may provide a method of 3D navigation using NPR 3D maps, including stylized visualization for the 3D objects in a navigation map. The 3D objects displayed on a 3D navigation map may include buildings, landmarks, POIs, hazard spots, and roads. The NPR 3D maps may be created based on 3D object data that may be generated in different ways. The 3D data may be offered by a data provider in a format suitable for only photorealistic rendering (for example, polygon meshes with photorealistic textures). In this case, such data may be enhanced for NPR rendering.

In order to avoid occlusion problems, the present invention may illustrate 3D objects that are along the route in a context-sensitive way that provides superior guidance to the user as to the location of the route relative to the 3D objects. The visualization style of these 3D objects (e.g., buildings or landmarks) along the route may be changed to highlight the route, or to make the route visually stand out to a greater degree. The method can be easily implemented in all kinds of 3D navigation systems with a lot of variations. The appearance (e.g., color tone, lighting or shading effects, outline of 3D objects, rendering styles such as nonphotorealistic) can be changed in a consistent way in order to make the location of the route in the display more visually clear. The 3D objects to be the subjects of such enhanced visualization effects may be chosen to be on only one side of the route (e.g., left- or right-hand side of the traveller, or on the far side of the route from the viewer) or both sides of the route. The enhanced visualization effects that may be provided to 3D objects along the route according to the invention may be referred to herein as "highlighting."

The context-sensitive 3D route guidance method of the invention may also be personalized. The user may specify what kind or category of 3D buildings along the route is to be highlighted in order to better convey the route information. Dependent upon the interests of the user, the highlighted buildings may be only restaurants, only hotels, only buildings having a height or width along the route above a certain threshold height or width, only buildings that have signage that is lit at night, or other types or categories of buildings. The user can also specify a combination of different types of 3D buildings that are to be highlighted. For example, the user may specify that only non-residential buildings having a width greater than 100 feet along the route are to be highlighted,

In general, the system can also allow the driver to select how dense these 3D objects should be visualized to highlight the route. For example, the user may specify that only one building in each block along the route be highlighted. In another embodiment, the user may disable all building selection based on category, and specify that only the single most prominent building on each block be highlighted. The building prominence may be determined based upon some measure of size and/or fame, and values for these parameters may be provided in a lookup table in memory. In selecting the density, the user may specify a number of buildings per block to be highlighted, wherein the number is greater than one. Or, the user may specify that only one building be highlighted per a selected number of blocks (e.g., the user may specify that only one building is to be highlighted in any group of four contiguous blocks).

In another embodiment, the user may combine the selection of buildings to be highlighted with a highlighting density specification. For example, the user may request that only buildings having retail shops as tenants be highlighted, with a maximum of three such buildings being highlighted per block. If more than the specified maximum number of buildings meet the criteria, then the buildings to be included in the maximum number may be selected by the system based on prominence.

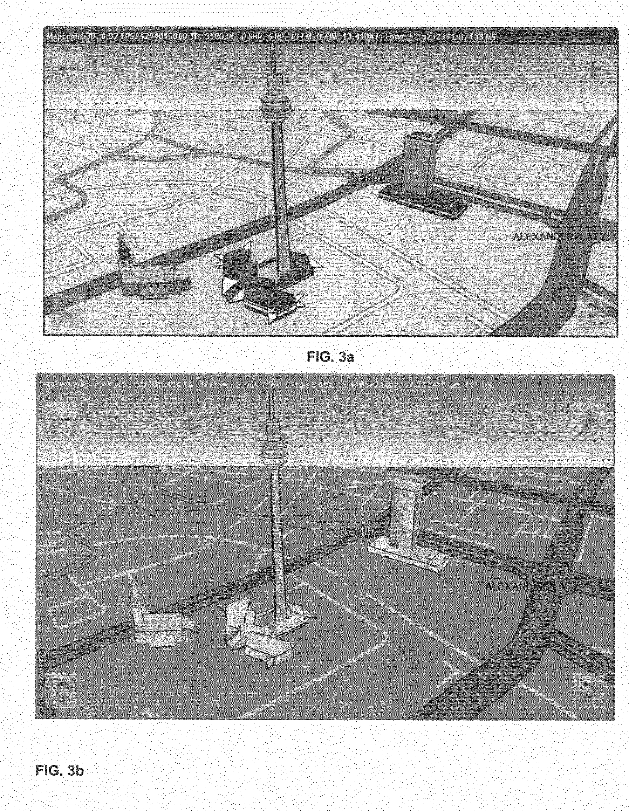

In FIGS. 3a and 3b are two examples of how the appearance of 3D landmarks may be enhanced or highlighted for nonphotorealistic 3D maps by use of the invention. That is, in FIGS. 3a and 3b, the buildings have been rendered in nonphotorealistic style in a nonphotorealistic 3D map system. The same 3D landmarks are rendered with two different styles in FIGS. 3a and 3b, respectively.

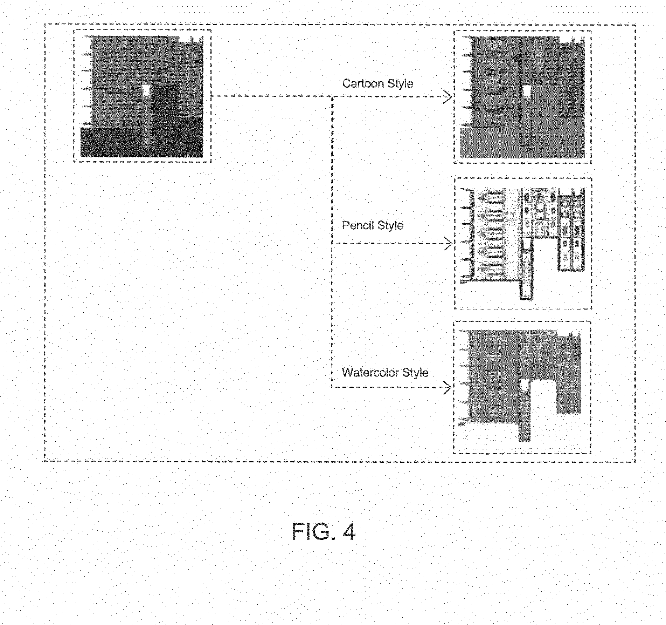

FIG. 4 illustrates different NPR styles that may be enhanced from the original 2D texture. The NPR texture enhancement may be defined to take an original photorealistic texture in the raw landmark data as the input and convert it into textures with different NPR styles. Various standard image processing techniques can be employed to accomplish this task. A third party image processing software (e.g., Adobe® Photoshop®) can also be used for this purpose.

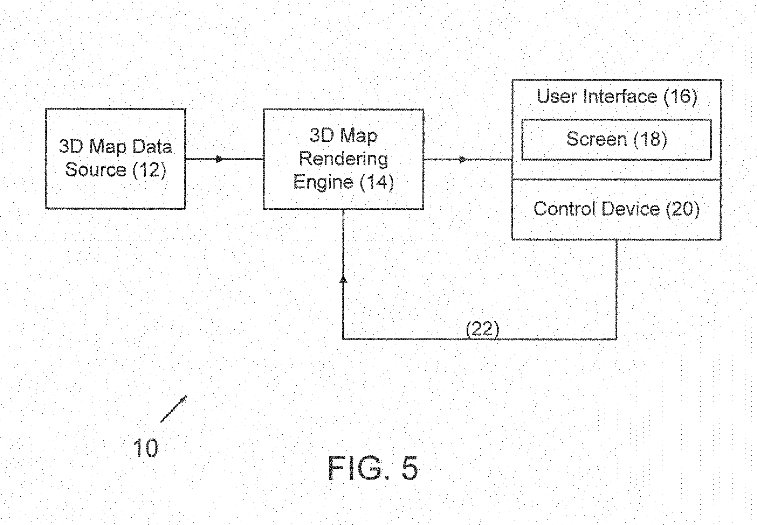

In FIG. 5 there is shown one embodiment of a 3D map rendering arrangement 10 of the present invention that may be associated with a vehicle, such as an automobile. That is, arrangement 10 may be installed in-vehicle.

Arrangement 10 may include a source 12 of 3D map data, a 3D map rendering engine 14, and a user interface 16. 3D map data source 12 may be in the form of a compact disc (CD) or other memory device. Alternatively, 3D map data may be wirelessly transmitted by a central transmitter (not shown) to a large number of vehicles that each has a respective 3D map rendering arrangement 10. Such wireless transmissions may be received by engine 14.

3D map data source 12 may also include a global positioning system (GPS) module (not shown) for determining the global location coordinates of the vehicle in real time. Based on the current location of the vehicle, corresponding 3D map data that is of interest to people within the vehicle is identified and provided to engine 14. At least some of the 3D map data may be photorealistic in visual style.

3D map rendering engine 14 may include a standard electronic processor that converts the 3D map data from source 12 into image data. During the course of rendering, engine 14 may select certain 3D objects in the data based on criteria provided by the user and may render the selected 3D objects in highlighted or enhanced rendering style, as described above. In one embodiment, the at least some of the highlighted image data may be in various nonphotorealistic styles, such as cartoon-like rendering, pencil sketches, pen-and-ink illustrations, oil painting effects, and other painterly styles. The nonphotorealistic renderings may depict surfaces of objects and distinctive or well-known features of the objects.

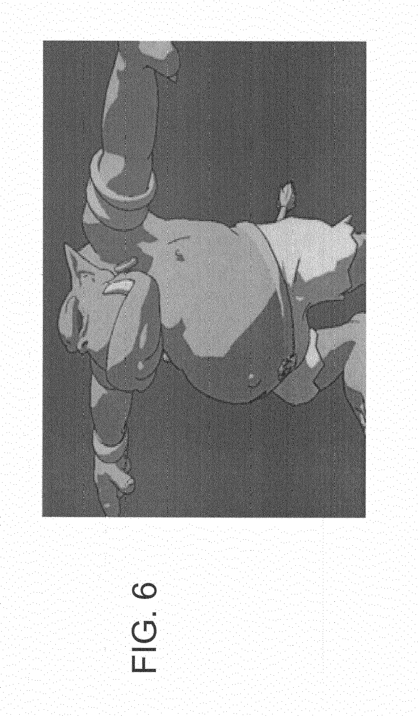

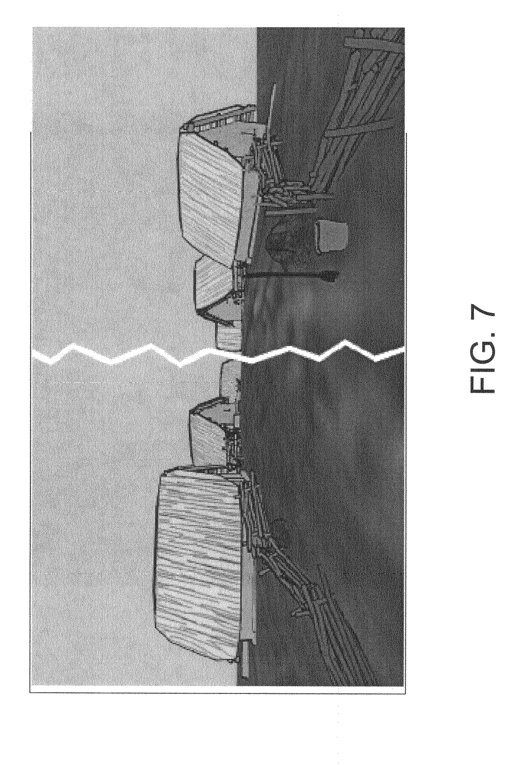

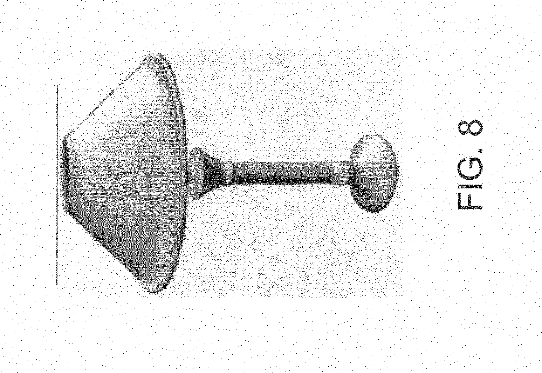

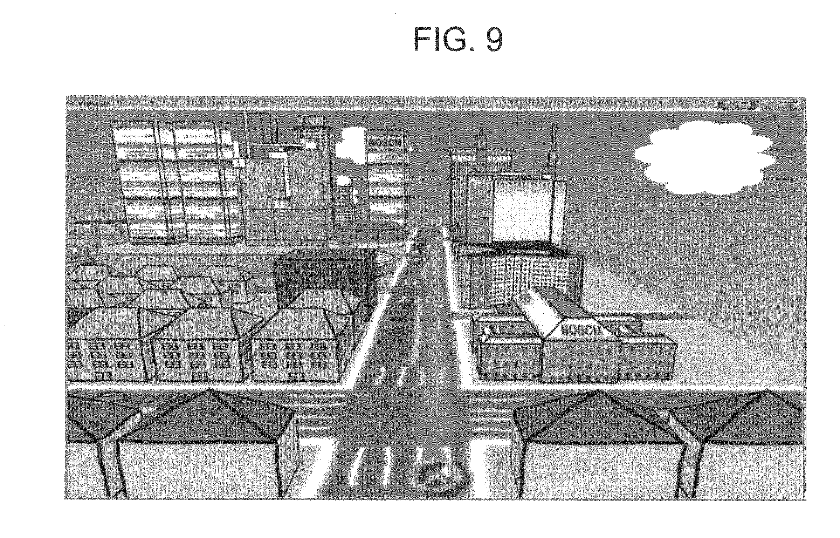

FIGS. 6-9 illustrate various NPR styles that have not been applied to the navigation domain in the prior art. Each of these styles in FIGS. 6-9 may be suitable for use in conjunction with NPR 3D map rending methods of the present invention. More particularly, FIG. 6 illustrates a cartoon-like stylized rendering technique for scalable real-time 3D animation; FIG. 7 illustrates a pen-and-ink rendering; FIG. 8 illustrates a real-time pencil rendering; and FIG. 9 illustrates a cartoon-style NPR 3D map that is an example of an NPR 3D map that may be rendered by the present invention.

In one embodiment, the user may be able to adjust the angle of view depicted in FIG. 9 to any viewing angle or any location at ground level or above. For example, the user may choose among a nearly infinite number of views along a 360 degree arc around any or all of the buildings. Further, the user may choose any downward viewing angle along a vertical plane.

User interface 16 may be disposed on a dashboard of a vehicle and may include a display screen 18 and a control device 20. Display screen 18 may include a processor and memory for controlling the information or content that is displayed on the screen or monitor. Generally, display screen 18 may present or depict 3D image data received from engine 14.

Control device 20 may be in the form of a dial, knob, set of pushbuttons, joystick, microphone, or any combination of the above. A user may use control device 20 to provide feedback 22 to engine 14. Feedback 22 may instruct engine 14 to produce another set of image data (e.g., image data depicting another scene, object or set of objects). Alternatively, feedback 22 may instruct engine 14 to change the viewing angle at which a current set of image data is being viewed. The viewing angle may vary from an overhead bird's-eye view of the surroundings to an angle looking up at buildings, or at other landmarks, from a ground level or street level.

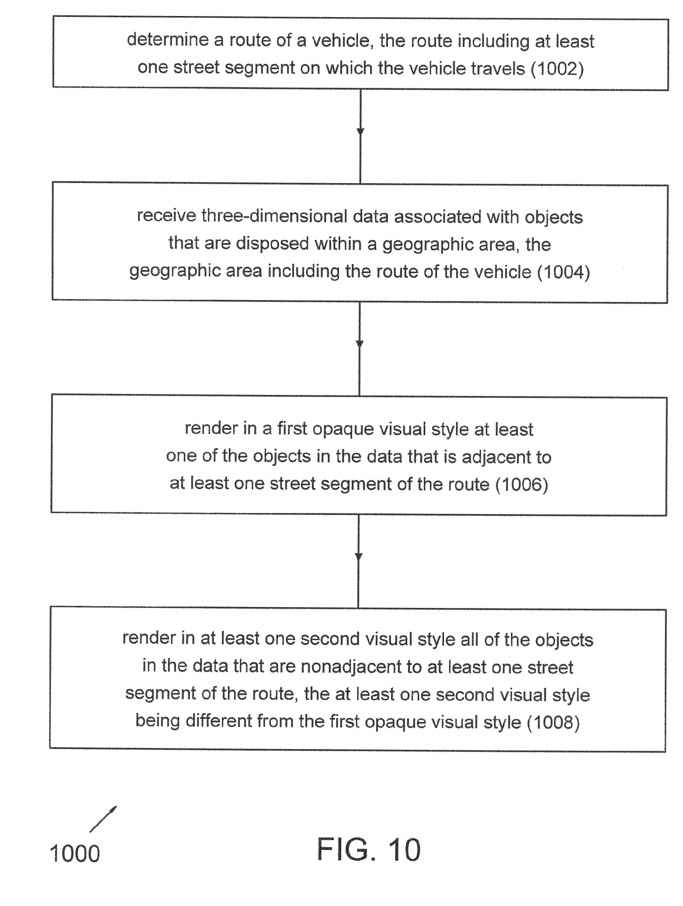

An embodiment of a method 1000 of the present invention for displaying a navigation map is illustrated in FIG. 10. In a first step 1002, a route of a vehicle is determined. The route includes at least one street segment on which the vehicle travels. For example, the arrangement of FIG. 5 may include a navigation system that automatically and continuously updates an optimum path or route from a vehicle's current location to a desired destination. A GPS or other location-determining device associated with the arrangement of FIG. 5 may ascertain and continuously update the current location of the vehicle, which may be expressed in global coordinates. The user inputs his desired destination into the system and the system automatically determines the shortest and/or quickest route from the current location to the destination location along the streets that are available. The route may follow a segment of each street included in the route, wherein the segment may be the entire length of the street or only a portion of the total length of the street.

In a next step 1004, three-dimensional data associated with objects that are disposed within a geographic area is received. The geographic area includes the route of the vehicle. For example, based on the vehicle's route determined in step 1002, map data associated with the geographic area surrounding the route of the vehicle may be retrieved from a memory device, such as a CD. Alternatively, the map data associated with the geographic area surrounding the route of the vehicle may be wirelessly received from a central repository of map data. Regardless of how it is received, the map data may include 3D data describing the shape, dimensions, colors and windows of the buildings, natural landmarks and other 3D objects within the geographic area surrounding the route of the vehicle. The map data may also include the type or category of the buildings or other 3D objects. The map data may also include other types of information such as the type of tenants in the building, lighting characteristics, etc.

The step of receiving three-dimensional data may further include constructing three-dimensional data in the case wherein the available data is not already in three-dimensional format. For example, some 3D navigation systems have complete 3D information for only important buildings. Other buildings may be represented by a 2D footprint plus some attribute information (e.g., building height). As a result, these are not strictly 3D data but are more or less 2D or 2.5D data. For this type of data, the 3D map rendering engine of the present invention may need to recover or reconstruct the 3D geometry for each building first and then render it. Where "receiving three-dimensional data" or similar language is used herein, it is to be understood that this language may encompass recovering, constructing, or reconstructing 3D data from 2D data, 2.5D data, or other provided data that is not strictly 3D data.

Next, in step 1006, at least one of the objects in the data that is adjacent to at least street segment of the route is rendered in a first opaque visual style. FIGS. 6-9 illustrate examples of nonphotorealistic styles in which the image may be rendered. Other opaque visual styles may include:
1. Rendering certain 3D objects in a unique or special color tone, such as:
   a. With yellow highlighting or highlighting of another color or color combination;
   b. In the objects' actual colors, while other objects may be rendered in greyscale or black and white;
2. Rendering certain 3D objects with unique or special lighting effects such as:
   a. Ground lighting (e.g., lighting directed upward from the ground level);
   b. Replicating the actual placement of light sources on the actual building;
   c. Replicating the actual lit signage on a building;
   d. Lighting the windows of a building;
3. Shading effects such as:
   a. Shading various surfaces of the object as the surfaces would actually be shaded with a particular placement of the sun and/or moon in the sky. The particular sun/moon placement could be with respect to the viewer (e.g., rotated 45 degrees clockwise from the viewer) or with respect to the object (e.g., directly above the object). The shading could also be based upon an actual real time location of the sun/moon as determined by the time of day, date, and geographical coordinates of the object or vehicle;
   b. The shading may also be on surfaces surrounding the objects, such as ground surfaces and/or surfaces of other nearby objects;
   c. The shading may be depicted in greyscale or cross-hatching, for example;
4. Outline of 3D objects wherein:
   a. The outline the object may have a line width that is thicker than it is in the rendering of other objects;
   b. The outline may have a color that is different than the color of other objects;
   c. The outline may have a highlighting effect such as fluorescent yellow or green.

In a final step 1008, all of the objects in the data that are nonadjacent to each street segment of the route are rendered in at least one second visual style. The at least one second visual style is different from the first opaque visual style. That is, all of the objects that are not adjacent to a street segment on the route may be rendered in a non-enhanced or non-highlighted style such that such objects may be visually distinguished by the viewer from the highlighted objects which are adjacent to a street segment on the route. In general, such non-highlighted objects may be rendered in a less eye-catching or unenhanced style such as photographic, black and white line drawings, grayscale, or only in an outline with the space within the outline left blank, for example.

It is also possible within the scope of method 1000 for some of the objects that are adjacent to a street segment on the route to also be rendered in the at least one second visual style. For example, objects that are adjacent to a street segment on the route but that that are not of a type selected by the user for highlighting (e.g., restaurants, hotels, etc.) may also be rendered in the more generic, less eye-catching style. In one embodiment, the image of all of the objects as rendered by engine 14 is displayed on a screen 18 of a user interface 16.

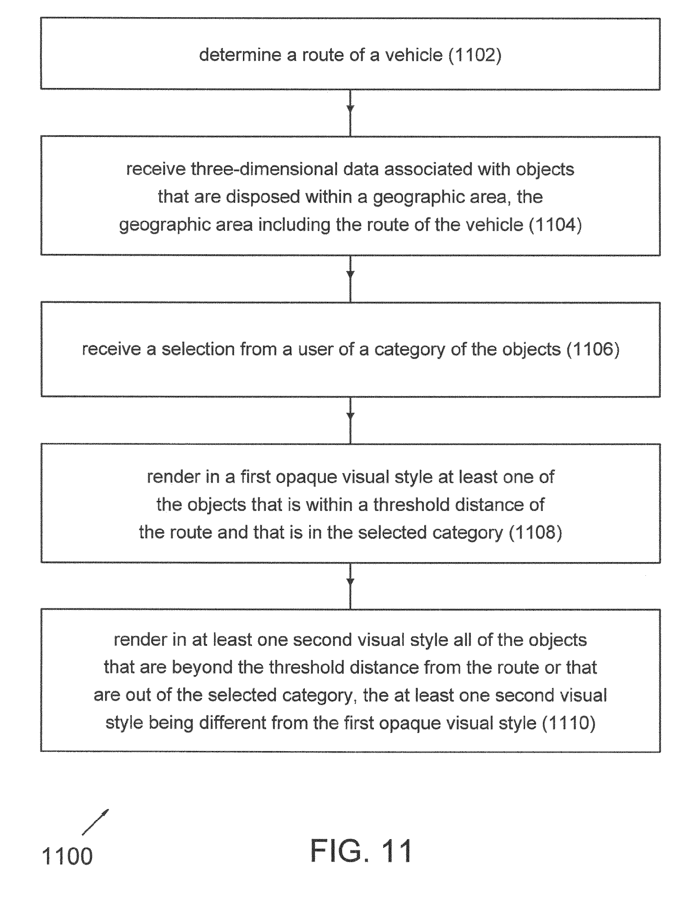

Another embodiment of a method 1100 of the present invention for displaying a navigation map is illustrated in FIG. 11. In a first step 1102, a route of a vehicle is determined. In a next step 1104, three-dimensional data associated with objects that are disposed within a geographic area is received. The geographic area includes the route of the vehicle.

Next, in step 1106, a selection is received from a user of a category of the objects. For example, the user may select the category of "fast food restaurants".

Next, in step 1108, at least one of the objects in the data that is within a threshold distance of the route and that is in the selected category is rendered in a first opaque visual style. For example, each identified fast food restaurant that is within a threshold distance such as four blocks or one-half mile of the vehicle's route may be rendered in a first opaque visual style such as a nonphotorealistic style or one of the other opaque visual styles described above. The user may set the threshold distance via a menu or via a command, for example.

In a final step 1110, all of the objects in the data that are beyond the threshold distance from the route or that are out of the selected category are rendered in at least one second visual style. The at least one second visual style is different from the first opaque visual style. Continuing the above example, all of the objects that are over four blocks or one-half mile from the route, as well as all objects that are not fast food restaurants, may be rendered in a non-enhanced or non-highlighted style such that the objects may be visually distinguished by the viewer from the highlighted fast food restaurants that are within four blocks or one-half mile of the route.

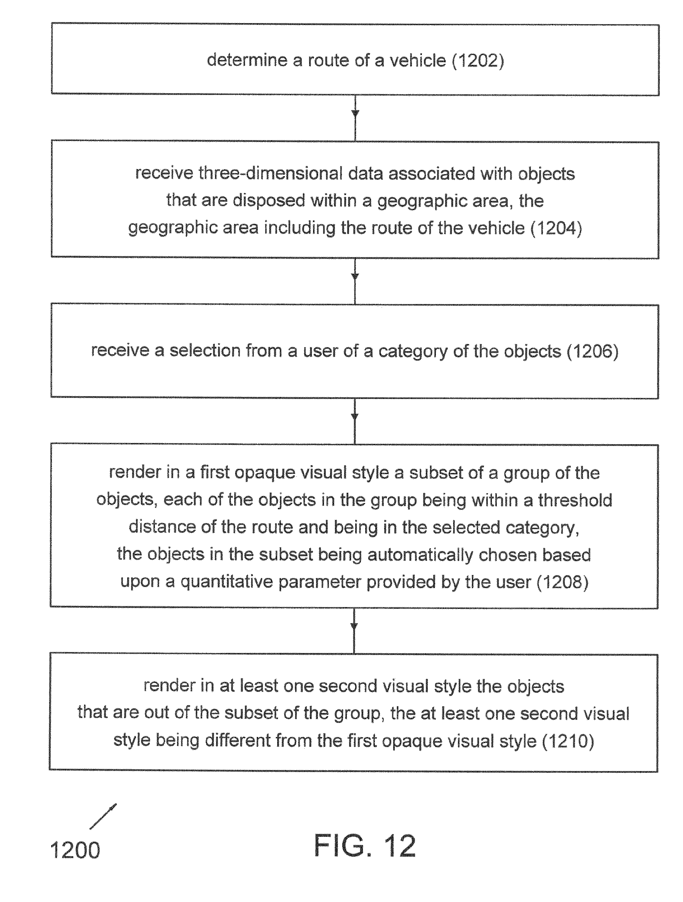

Yet another embodiment of a method 1200 of the present invention for displaying a navigation map is illustrated in FIG. 12. In a first step 1202, a route of a vehicle is determined. In a next step 1204, three-dimensional data associated with objects that are disposed within a geographic area is received. The geographic area includes the route of the vehicle.

Next, in step 1206, a selection is received from a user of a category of the objects. For example, the user may select the category of "United States National Landmarks," which may include U.S. National Historic Landmarks and/or U.S. National Natural Landmarks.

Next, in step 1208, a subset of a group of the objects is rendered in a first opaque visual style. Each of the objects in the group is within a threshold distance of the route and is in the selected category. The objects in the subset are automatically chosen based on a quantitative parameter provided by the user. For example, each identified U.S. National Landmark that is within a threshold distance such as eight blocks or one mile of the vehicle's route may be considered to be in the group of objects. The user may provide a quantitative parameter, such as a maximum number of objects in the group that may be rendered in a first opaque visual style per display screen or per unit length of the route (e.g., per mile). The members of the subset of the group may be chosen based on the quantitative parameter. For example, the user may specify that no more than three U.S. National Landmarks be rendered in the first opaque visual style within any two-mile long span of the route. If there are more than three U.S. National Landmarks within any two-mile long span of the route, then three of them may be chosen for the subset and consequently enhanced rendering or "highlighting" based upon the order of prominence of the U.S. National Landmarks, as may be provided in a lookup table. Alternatively, the three may be chosen based on some objective criterion, such as size and/or age. The user may set the maximum number of objects in the subset via a menu or via a command, for example.

In a final step 1210, the objects that are out of the subset of the group are rendered in at least one second visual style. The at least one second visual style is different from the first opaque visual style. Continuing the above example, the objects other than the three objects included in the subset may be rendered in a non-enhanced or non-highlighted style such that the objects may be visually distinguished by the viewer from the three highlighted U.S. National Landmarks included in the subset.

While this invention has been described as having an exemplary design, the present invention may be further modified within the spirit and scope of this disclosure. This application is therefore intended to cover any variations, uses, or adaptations of the invention using its general principles.

## Claims

1. A method of displaying a navigation map, comprising the steps of:
determining a route of a vehicle, the route including at least one street segment on which the vehicle travels;
receiving three-dimensional data associated with objects that are disposed within a geographic area, the geographic area including the route of the vehicle;
rendering in a first opaque visual style at least one of the objects in the data that is adjacent to at least one said street segment of the route; and
rendering in at least one second visual style all of the objects in the data that are nonadjacent to each said street segment of the route, the at least one second visual style being different from the first opaque visual style; wherein the three-dimensional data is received from a data provider in a format suitable for photorealistic rendering.

2. The method of Claim 1 wherein the objects comprise buildings.

3. The method of Claim 2 wherein at least one but less than all of the buildings that are adjacent to at least one said street segment are rendered in the first opaque visual style.

4. The method of Claim 1 wherein the first opaque visual style is **characterized by** at least one of a nonphotographic style, a distinctive color tone, lighting effects, shading effects, and distinctive outlining of objects.

5. The method of Claim 1 wherein the second visual style is **characterized by** at least one of a photographic style, black and white line drawings, and grayscale drawings.

6. The method of Claim 1 wherein the at least one object that is rendered in the first opaque visual style is automatically chosen at least partially based upon a quantitative parameter provided by the user.

7. The method of Claim 6 wherein the quantitative parameter comprises one of:
a fixed percentage of the objects to be rendered in the first opaque visual style;
a maximum percentage of the objects to be rendered in the first opaque visual style;
a fixed number of the objects to be rendered in the first opaque visual style per unit length of the route; and
a maximum number of the objects to be rendered in the first opaque visual style per unit length of the route.

8. The method of claim 1 comprising the further step of displaying an image including the objects rendered in the first and second visual styles on a display screen within the vehicle.

9. The method of claim 8 wherein a view of the route in the displayed image is partially occluded by at least one of the objects.

10. The method of claim 1 comprising the further step of receiving a selection from a user of a category of the objects, the first rendering step including rendering in the first opaque visual style at least one of the objects that is within a threshold distance of the route and that is in the selected category, and the second rendering step including rendering in at least one second visual style all of the objects that are beyond the threshold distance from the route or that are out of the selected category.

11. The method of Claim 10 wherein the objects include buildings, the selected category comprising at least one of:
hotels;
restaurants;
buildings having at least one retailer as a tenant;
public buildings;
buildings having a predetermined lighting characteristic; and
buildings having a predetermined dimensional characteristic.

12. The method of Claim 10 wherein the first rendering step includes rendering in a first opaque visual style a subset of a group of the objects, each of the objects in the group being within a threshold distance of the route and being in the selected category, the objects in the subset being automatically chosen based upon a quantitative parameter provided by the user, and the second rendering step includes rendering in at least one second visual style the objects that are out of the subset of the group.

13. The method of Claim 1 wherein the three-dimensional data is received as at least one polygon mesh with at least one photorealistic texture.

14. The method of Claim 1 comprising the further step of enhancing the three-dimensional data for nonphotorealistic rendering.
